Europäisches Patentamt

European Patent Office

Office européen des brevets

(11) Veröffentlichungsnummer: **0 332 740 B1**

(12) **EUROPÄISCHE PATENTSCHRIFT**

(45) Veröffentlichungstag der Patentschrift: **09.12.92**

(21) Anmeldenummer: **88117628.3**

(22) Anmeldetag: **22.10.88**

(51) Int. Cl.⁵: **B23K 1/00**, B23K 3/00,
//B05B17/06

(54) **Verfahren und Vorrichtung zum Auftragen eines Flussmittels.**

(30) Priorität: **18.03.88 DE 3809156**

(43) Veröffentlichungstag der Anmeldung:
**20.09.89 Patentblatt 89/38**

(45) Bekanntmachung des Hinweises auf die
Patenterteilung:
**09.12.92 Patentblatt 92/50**

(84) Benannte Vertragsstaaten:
**AT BE CH DE ES FR GB GR IT LI LU NL SE**

(56) Entgegenhaltungen:
**EP-A- 0 118 091**
**DE-A- 2 916 977**

(73) Patentinhaber: **Hohnerlein, Ernst**
**Ringstrasse 7**
**W-6983 Kreuzwertheim(DE)**

(72) Erfinder: **Hohnerlein, Ernst**
**Ringstrasse 7**
**W-6983 Kreuzwertheim(DE)**

(74) Vertreter: **Schieferdecker, Lutz, Dipl.-Ing.**
**Herrnstrasse 37**
**W-6050 Offenbach am Main(DE)**

**Beschreibung**

Die Erfindung betrifft ein Verfahren und eine Vorrichtung zum Auftragen eines Flußmittels auf eine Lötstelle eines Werkstückes, wobei zunächst ein Flußmittelnebel mit Hilfe von Ultraschall erzeugt und sodann aufgetragen wird.

Ein Verfahren und eine Vorrichtung der genannten Art sind z.B. aus der DE-A1-29 16 977 bekannt. Die Durchführung des Verfahrens erfolgt in einer automatisch arbeitenden Vorrichtung, wobei ferner die Gegenstände in dem Zerstäubungsbereich nicht nur beschichtet, sondern auch in einer Arbeitsrichtung bewegt werden. Dadurch soll der nur eine geringe Eigengeschwindigkeit aufweisende Flußmittelnebel sich auf der zu beschichtenden Lötstelle niederschlagen, wobei ferner in vorteilhafter Weise vermieden werden soll, daß sich der Flußmittelnebel unkontrolliert neben den zu beschichtenden Gegenstand bewegt und die Atmosphäre verunreinigt und sich auch an unerwünschten Stellen niederschlägt. Darüberhinaus bersteht bei der bekannten Vorrichtung die Möglichkeit, den flußmittelnebel mittels einer geeigneten Führungsdüse genau auf die zu beschichtende Fläche auszurichten.

In der Praxis haben sich das in der DE-A1-29 16 977 beschriebene Verfahren und die zugehörige Vorrichtung allerdings nicht bewährt, so daß sie sich nicht durchsetzen konnten. Offensichtlich war die Streuung des aufzutragenden Flußmittels zu groß und die Verschmutzung der Randbereiche mit der sich daraus ergebenden Notwendigkeit, die verschmutzten Teile wieder zu reinigen, derart groß, daß das Ultraschall-Zerstäubungsverfahren bisher bedeutungslos geblieben ist.

Der Erfindung liegt daher die Aufgabe zugrunde, ein Verfahren und eine Vorrichtung zum Auftragen von Flußmittel auf eine geometrisch genau definierte Lötstelle zu schaffen, wobei ein mengenmäßig möglichst gleichmäßiger Auftrag in dem räumlich definierten Bereich erfolgen soll.

Zur Lösung dieses Problems sieht die Erfindung vor, daß die Zerstäubung des Flußmittels drucklos bzw. annähernd drucklos erfolgt, daß der Flußmittelnebel sodann mit Hilfe einer gezielten Luftströmung zur Lötstelle transportiert wird und daß der Ultraschallzerstäuber zusammen mit einer die gezielte Luftströmung erzeugenden Blaseinrichtung quer zur Transportrichtung des die Lötstelle aufweisenden Werkstükkes bewegbar angeordnet ist.

Die drucklose oder nahezu drucklose Ultraschallzerstäubung des Flußmittels läßt einen Flußmittelnebel weitgehend ohne jegliche Luftverwirbelung entstehen. Er bildet sich unmittelbar im Bereich des Zerstäuberelementes. Zum Auftragen der im Flußmittelnebel befindlichen Substanz auf die Lötstelle dient sodann die gezielte Luftströmung, die den Flußmittelnebel vom Zerstäuberelement zur Lötstelle transportiert und dort den gewünschten Niederschlag bewirkt.

Vor allem Flußmittel mit einem sehr geringen Feststoffgehalt wie beispielsweise in der Größenordnung von 1 % eignen sich sehr gut für eine Ultraschallzerstäubung und reichen in vielen Fällen zum Löten völlig aus.

Zum Auftragen des Flußmittelnebels auf die Lötstelle wird als Transportmedium Luft benutzt. Da die Lötstelle auf einem Werkstück an verschiedenen Stellen angeordnet sein kann und die Steuerung der Transportluft zum Erreichen der verschiedenen Lötstellen Schwierigkeiten mit sich bringen könnte, sind der Ultraschallzerstäuber und die zu ihm gehörende Blaseinrichtung zusätzlich bewegbar angeordnet. Mit Hilfe aller Merkmale läßt sich ein Flußmittelauftrag auf geometrisch genau definierte Lötstellen erreichen, ohne daß es zu einer Verschmutzung der jeweiligen Umgebung in dem bisher bekannten Umfang kommt.

Weitere Merkmale der Erfindung gehen aus Unteransprüchen im Zusammenhang mit der Beschreibung und der Zeichnung hervor.

Die Erfindung wird nachstehend anhand eines Ausführungsbeispieles, das in der Zeichnung dargestellt ist, näher beschrieben. Dabei zeigen:

Fig. 1: eine Prinzipskizze der Vorrichtung zum Auftragen von Flußmittel mit einem Ultraschallzerstäuber und

Fig. 2: eine schematische Draufsicht auf die Vorrichtung zum Ultraschallzerstäuben.

Eine Vorrichtung 1 zum Auftragen von Flußmittel auf eine geometrisch definierte Lötstelle wie z.B. auf eine in den Figuren nicht dargestellte Leiterplatte weist einen Ultraschallzerstäuber 2 auf, der einen Oszillator 3, einen in ein Gehäuse 4 integrierten Schwingungserzeuger und ein Zerstäuberelement 5 umfaßt. Das Zerstäuberelement 5 ist z.B. trompetenförmig und besteht aus einem Rohr 6 mit einem sich konisch erweiternden, freien Ende. Mit Hilfe des Oszillators 3 wird der Schwingungserzeuger im Gehäuse 4 über eine Verbindungsleitung 7 in Schwingungen versetzt und überträgt diese auf das Zerstäuberelement 5, so daß dort befindliche Flüssigkeit in entsprechende Schwingungen versetzt und im Falle von Ultraschallschwingungen zerstäubt bzw. vernebelt wird.

In das aus einem Rohr 6 bestehende, bzw. an seinem freien Ende trompetenförmige Zerstäuberelement 5 gelangt das Flußmittel durch eine an das Gehäuse 4 ebenfalls angeschlossene Rohr- oder Schlauchleitung 8, deren anderes Ende an einen Vorratsbehälter 9 für Flußmittel angeschlossen ist.

Die Ultraschallzerstäubung des Flußmittels am Zerstäuberelement 5 soll möglichst bzw. annähernd druckfrei erfolgen. Aus diesem Grund ist der Vorratsbehälter 9 mit einem Überlauf 10 versehen, der derart angeordnet ist, daß sich der Flüssigkeitsspiegel 11 des Flußmittels im Vorratsbehälter 9 auf demselben Niveau oder annähernd demselben Niveau befindet wie die trompetenförmige Öffnung des Zerstäuberelementes 5. Nach dem Prinzip kommunizierender Röhren fließt dann Flußmittel aus dem Vorratsbehälter 9 durch die Leitung 8 und eine im Gehäuse 4 befindliche Verbindungsleitung in das rohrförmige Zerstäuberelement 5 und steht dann am trompetenförmigen Ende des Zerstäuberelementes 5 druckfrei an.

Der Vorratsbehälter 9 ist ferner über eine weitere Leitung 12 mit einer Pumpe 13 verbunden, die aus einem zweiten Vorratsbehälter 14 Flußmittel ansaugt und zum Vorratsbehälter 9 pumpt. Der Überlauf 10 ist an den Vorratsbehälter 14 angeschlossen, so daß die Pumpe 13 in einem geschlossenen Kreislauf Flußmittel durch die Leitung 12 zum Vorratsbehälter 9 pumpen kann, wobei gleichzeitig der nicht benötigte Überschuß zum Vorratsbehälter 14 und somit zur Pumpe 13 unter Beibehaltung eines konstanten Flüssigkeitsniveaus zurückfließt.

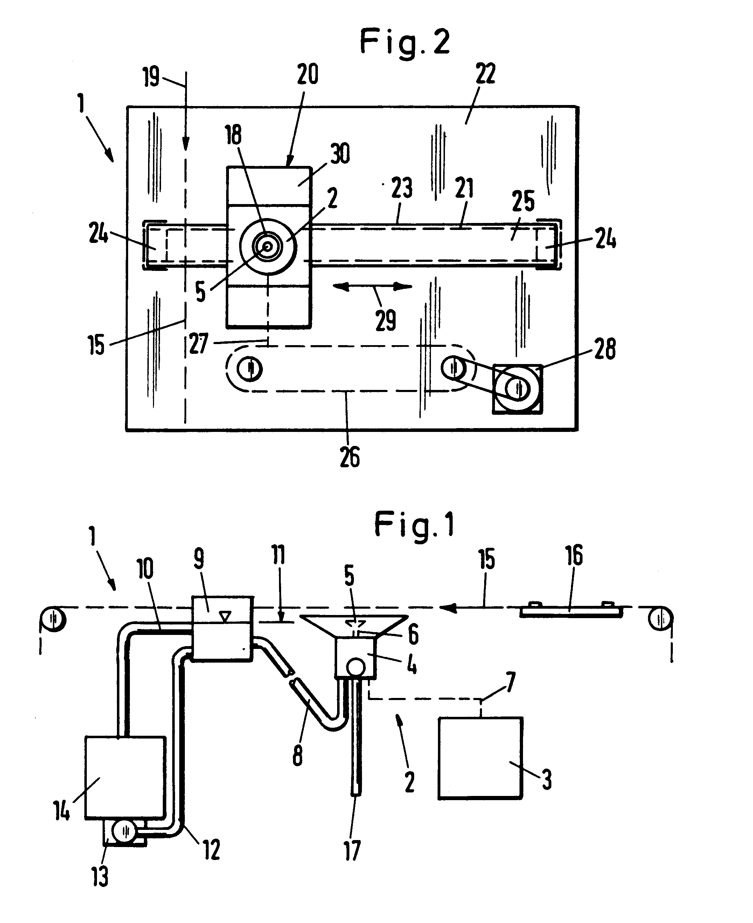

In Fig. 1 ist schließlich noch schematisch mit gestrichelten Linien eine Transportvorrichtung 15 für einen Werkstückträger 16 angedeutet. Die Transportvorrichtung 15 befindet sich über bzw. oberhalb von dem Ultraschallzerstäuber 2, dessen Zerstäuberelement 5 mit der trompetenförmigen Öffnung von unten nach oben gerichtet ist. Zum Auftragen von Flußmittel auf ein am Werkstückträger 16 befestigtes, in Fig. 1 nicht dargestelltes Werkstück wird der Werkstückträger 16 über den Ultraschallzerstäuber 2 gefahren und verweilt in dieser Position dann solange, bis der Flußmittelauftrag erfolgt ist. Da sich an der trompetenförmigen Öffnung des Zerstäuberelementes 5 während der Ultraschallzerstäubung nur ein Flußmittelnebel bildet, erfolgt der eigentliche Transport und Auftrag des Flußmittels auf das Werkstück schließlich noch mit Hilfe einer Luftströmung, die den Flußmittelnebel im Bereich der trompetenförmigen Öffnung des Zerstäuberelementes 5 erfaßt und zum Werkstück bläst. Zur Erzeugung dieser Luftströmung führt eine Druckluftleitung 17 zu dem Gehäuse 4 des Ultraschallzerstäubers 2 und ist mit einer Düsenanordnung bzw. einer Ringdüse 18 (Fig. 2) verbunden, die das Zerstäuberelement 5 konzentrisch umgibt.

Es versteht sich schließlich, daß der Vorratsbehälter 9 derart seitlich neben der Transportvorrichtung 15 angeordnet ist, daß er diese nicht beeinträchtigt. Die vom Vorratsbehälter 9 zum Gehäuse 4 des Ultraschallzerstäubers 2 führende Leitung 8 ist ferner eine möglichst biegsame Leitung, damit der Ultraschallzerstäuber 2 nicht nur stationär verwendbar ist, sondern selbst ebenfalls bewegbar gelagert werden kann und relativ zur Transportvorrichtung15, vorzugsweise senkrecht zu dessen Bewegungsrichtung bewegbar ist.

Eine derartige Anordnung mit einem Ultraschallzerstäuber 2, der selbst senkrecht zur Bewegungsrichtung 19 einer ebenfalls gestrichelt angedeuteten Transportvorrichtung 15 bewegbar ist, zeigt Fig. 2. Hier ist der Ultraschallzerstäuber 2 zusammen mit einer aus der Ringdüse 18 und einer Druckluftversorgung bzw. Druckluftleitung 17 bestehenden Blaseinrichtung an einem schlittenartigen Träger 20 angeordnet und mit diesem quer zur Bewegungsrichtung 19 der Transportvorrichtung 15 für die Werkstücke bewegbar. Einzelheiten des schlittenartigen Trägers 20 sind in den Figuren nicht dargestellt, doch durchgreift er ein Langloch 21 in einer Bodenplatte 22 und ist in ein Dichtungsband 23 integriert, welches das Langloch 21 abdeckt. Das Dichtungsband 23 besteht aus einem Obertrum und einem Untertrum und ist um Umlenkrollen 24 geführt. Das Obertrum 25 liegt auf der Oberseite der Bodenplatte 22 und überdeckt mit seinen Rändern das Langloch 21 in der Bodenplatte 22.

Als Antrieb für den schlittenartigen Träger 20 ist ein umlaufender, parallel zum Dichtungsband 23 angeordneter Bandantrieb 26 mit einem Mitnehmer 27 vorgesehen, der unmittelbar am schlittenartigen Träger 20 angreift. Ein Motor 28 dient zur Ansteuerung des Bandantriebes 26 in der jeweils gewünschten Bewegungsrichtung entsprechend dem Pfeil 29. Die beiden Richtungsumsteuerungspunkte können in bekannter Weise einstellbar sein, so dass die Arbeitsbreite des in Querrichtung hin- und herbewegten Ultraschallzerstäubers 2 an die Breite des mit einem Flußmittelauftrag zu versehenden Werkstücks, bespielsweise einer rückseitig zu verlötenden Leiterplatte, angepasst und gegenüber der Transportvorrichtung 15 für das kontinuierlich vorbewegte Werkstück ausgerichtet werden kann.

Schließlich ist noch eine Tropfenauffangwanne 30 bei der in Fig. 2 dargestellten Anordnung dem Ultraschallzerstäuber 2 zugeordnet. Sie ist ebenfalls am Träger 20 befestigt und umgibt das Zerstäuberelement 5.

**Patentansprüche**

1. Verfahren zum Auftragen eines Flußmittels auf eine Lötstelle eines Werkstückes, wobei ein Flußmittelnebel mit Hilfe von Ultraschall erzeugt und aufgetragen wird, dadurch gekennzeichnet,

    a) daß die Zerstäubung des Flußmittels drucklos bzw. annähernd drucklos erfolgt;

    b) daß der Flußmittelnebel mit Hilfe einer gezielten Luftströmung zur Lötstelle transportiert wird und

c) daß der Ultraschallzerstäuber (2) zusammen mit einer die gezielte Luftströmung erzeugenden Blaseinrichtung (17, 18) quer zur Transportrichtung (15) des die Lötstelle aufweisenden Werkstückes bewegbar angeordnet ist.

2. Verfahren nach Anspruch 1, dadurch gekennzeichnet, daß der Flußmittelnebel von der Luftströmung von unten nach oben zur Lötstelle transportiert wird.

3. Vorrichtung zum Auftragen eines Flußmittels auf eine Lötstelle eines Werkstückes mit Hilfe eines Ultraschallzerstäubers (2), der einen Schwingungserzeuger, ein Zerstäuberelement (5) sowie einen Vorratsbehälter (9) mit Flußmittel umfaßt, dadurch gekennzeichnet, daß eine Einrichtung (8, 9, 10) zum drucklosen Zuführen von Flußmittel zum Ultraschallzerstäuber (2) und eine Blaseinrichtung (17, 18) zur gezielten Weiterleitung von Druckluft von dem Zerstäuberelement (5) des Ultraschallzerstäubers (2) zur Lötstelle vorgesehen sind und daß der Ultraschallzerstäuber (2) und die Blaseinrichtung (17, 18) quer zur Transportrichtung (15) des Werkstückes bewegbar sind.

4. Vorrichtung nach Anspruch 3, dadurch gekennzeichnet, daß der Ultraschallzerstäuber (2) zusammen mit der Blaseinrichtung (17, 18) an einem quer zur Transportrichtung (15) bewegbaren Träger (20) angeordnet ist.

5. Vorrichtung nach einem oder mehreren der vorhergehenden Ansprüche, dadurch gekennzeichnet, daß der Träger (20) für den Ultraschallzerstäuber (2) und für die Blaseinrichtung (17, 18) unterhalb einer Bodenplatte (22) angeordnet ist, daß die Bodenplatte (22) ein sich quer zur Transportrichtung der Werkstücke erstreckendes Langloch (21) aufweist, daß ein dieses abdeckendes, bewegbares Dichtungsband (23) vorgesehen ist und daß der Ultraschallzerstäuber (2) und die Blaseinrichtung (17, 18) in das Dichtungsband (23) integriert sind.

6. Vorrichtung nach einem oder mehreren der vorhergehenden Ansprüche, dadurch gekennzeichnet, daß die Blaseinrichtung eine Ringdüse (18) umfaßt, die das Zerstäuberelement (5) konzentrisch umgibt.

7. Vorrichtung nach einem oder mehreren der vorhergehenden Ansprüche, dadurch gekennzeichnet, daß ein Vorratsbehälter (9) für das Flußmittel vorgesehen ist und über eine Rohr- oder Schlauchleitung (8) mit dem Zerstäuberelement (5) verbunden ist und daß der Vorratsbehälter (9) einen Überlauf (10) aufweist, dessen Niveau auf Höhe des Zerstäuberelementes (5) angeordnet ist.

8. Vorrichtung nach einem oder mehreren der vorhergehenden Ansprüche, dadurch gekennzeichnet, daß das Zerstäuberelement (5) ein trompetenförmiges, freies Ende aufweist.

## Claims

1. A method of applying a fluxing agent to a soldering location on a workpiece, wherein a fluxing agent mist is produced by means of ultrasound and applied, characterised in that

a) atomisation of the fluxing agent is effected in a pressure-less or approximately pressure-less condition;

b) the fluxing agent mist is transported to the soldering location by means of a directed air flow, and

c) the ultrasonic atomiser (2) together with a blowing means (17, 18) for producing the directed air flow is arranged movably transversely to the direction of transportation (15) of the workpiece having the soldering location.

2. A method according to claim 1 characterised in that the fluxing agent mist is transported by the air flow from below upwardly to the soldering location.

3. Apparatus for applying a fluxing agent to a soldering location on a workpiece by means of an ultrasonic atomiser (2) which includes an oscillation generator, an atomiser element (5) and a supply container (9) with fluxing agent, characterised in that there are provided a means (8, 9, 10) for the pressure-less feed of fluxing agent to the ultrasonic atomiser (2) and a blowing means (17, 18) for the directed passage of compressed air from the atomiser element (5) of the ultrasonic atomiser (2) to the soldering location, and that the ultrasonic atomiser (2) and the blowing means (17, 18) are movable transversely to the transportation direction (15) of the workpiece.

4. Apparatus according to claim 3 characterised in that the ultrasonic atomiser (2) together with the blowing means (17, 18) is arranged on a carrier (20) which is movable transversely to the transportation direction (15).

5. Apparatus according to one or more of the preceding claims characterised in that the carrier (20) for the ultrasonic atomiser (2) and for the blowing means (17, 18) is arranged beneath a base plate (22), that the base plate (22) has a slot (21) extending transversely to the transportation direction of the workpieces, that there is provided a movable sealing belt (23) which covers over the slot, and that the ultrasonic atomiser (2) and the blowing means (17, 18) are integrated into the sealing belt (23).

6. Apparatus according to one or more of the preceding claims characterised in that the blowing means includes an annular nozzle (18) which concentrically surrounds the atomiser element (5).

7. Apparatus according to one or more of the preceding claims characterised in that there is provided a supply container (9) for the fluxing agent, which supply container is connected to the atomiser element (5) by way of a pipe or hose (8), and that the supply container (9) has an overflow (10), the level of which is arranged at the height of the atomiser element (5).

8. Apparatus according to one or more of the preceding claims characterised in that the atomiser element (5) has a trumpet-shaped free end.

**Revendications**

1. Procédé pour l'application d'un flux sur un point à braser d'une pièce d'ouvrage selon lequel un brouillard de flux est produit à l'aide d'ultra-sons et appliqué, caractérisé en ce que:
   a) la diffusion du flux a lieu sans pression ou presque sans pression;
   b) le brouillard de flux est transporté au point à braser à l'aide d'un courant d'air sélectif, et
   c) le diffuseur à ultra-sons (2) est placé de manière mobile avec un dispositif de soufflerie (17, 18) produisant un courant d'air sélectif perpendiculairement au sens du transport (15) de la pièce d'ouvrage présentant le point à braser.

2. Procédé selon la revendication 1 caractérisé en ce que le brouillard de flux est transporté par le courant d'air du bas vers le haut vers le point à braser.

3. Dispositif d'application d'un flux sur un point à braser d'une pièce d'ouvrage à l'aide d'un diffuseur à ultra-sons (2) comprenant un générateur de vibrations, un élément de diffuseur (5) ainsi qu'un réservoir (9) avec du flux, caractérisé en ce qu'on a prévu un dispositif (8, 9, 10) pour l'alimentation sans pression en flux du diffuseur à ultra-sons (2) et un dispositif de soufflerie (17, 18) pour l'acheminement sélectif d'air comprimé de l'élément de diffuseur (5) du diffuseur à ultra-sons (2) au point à braser et que le diffuseur à ultra-sons (2) et le dispositif de soufflerie (17, 18) peuvent être déplacés perpendiculairement au sens de transport (15) de la pièce d'ouvrage.

4. Dispositif selon la revendication 3 caractérisé en ce que le diffuseur à ultra-sons (2) est placé avec le dispositif de soufflerie (17, 18) sur un porteur (20) pouvant être déplacé perpendiculairement au sens du transport (15).

5. Dispositif selon l'une ou plusieurs des revendications précédentes caractérisé en ce que le porteur (20) pour le diffuseur à ultra-sons (2) et pour le dispositif de soufflerie (17, 18) est placé en dessous d'une plaque de base (22), que la plaque de base présente un trou longitudinal (21) s'étendant perpendiculairement au sens de transport de la pièce d'ouvrage, qu'une bande d'étanchéité (23) mobile couvrant celui-ci est prévue et que le diffuseur à ultra-sons (2) et le dispositif de soufflerie (17, 18) sont intégrés dans la bande d'étanchéité (23).

6. Dispositif selon l'une ou plusieurs des revendications précédentes, caractérisé en ce que le dispositif de soufflerie comprend une buse annulaire (18) qui entoure de manière concentrique l'élément de diffuseur (5).

7. Dispositif selon l'une ou plusieurs des revendications précédentes, caractérisé en ce qu'un réservoir (9) pour le flux est prévu et est raccordé à l'élément de diffuseur (5) par le biais d'une conduite (8) en tuyau flexible ou en tuyau souple et que le réservoir (9) présente un trop-plein (10) dont le niveau est placé à la hauteur de l'élément de diffuseur (5).

8. Dispositif selon l'une ou plusieurs des revendications précédentes caractérisé en ce que l'élément de diffuseur (5) présente une extrémité libre en forme de trompette.

EP 0 332 740 B1

# Fig.2

# Fig.1